# FASCICULE DE BREVET EUROPEEN

(11) **EP 0 491 682 B1**
(45) Date de publication et mention de la délivrance du brevet: **12.05.1993**
(21) Numéro de dépôt: 92440020.3
(22) Date de dépôt: 11.02.1992
(51) Int. Cl.: B29C 45/14, B29C 45/00

(54) **Procédé pour la fabrication de pièces moulées comportant un support rigide et un recouvrement souple**
Verfahren zur Herstellung von geformten Gegenständen mit einer starren Unterlage und einer biegsamen Beschichtung
Method for the manufacture of moulded articles comprising a rigid support and a flexible coating

(43) Date de publication de la demande: 24.06.1992
(73) Titulaire: NEYR PLASTIQUES (S.A.), F-01580 Izernore (FR)
(72) Inventeur: Antonicelli, Francis, F-01460 La Cluse (FR)
(74) Mandataire: Bossard, Jacques-René

(56) Documents cités:
- EP-A- 0 043 174
- EP-A- 0 320 925
- EP-A- 0 326 408
- DE-A- 2 114 181
- FR-A- 2 244 618
- US-A- 3 654 062
- PATENT ABSTRACTS OF JAPAN vol. 10, no. 326 (M-532)(2382) 6 Novembre 1986
- PATENT ABSTRACTS OF JAPAN vol. 11, no. 269 (M-621)(2716) 2 Septembre 1987
- PATENT ABSTRACTS OF JAPAN vol. 11, no. 241 (M-614)(2688) 7 Août 1987
- PATENT ABSTRACTS OF JAPAN vol. 8, no. 195 (M-323)(1632) 7 Septembre 1984
- PATENT ABSTRACTS OF JAPAN vol. 12, no. 490 (M-779)(3337) 21 Décembre 1988

## Description

La présente invention concerne un procédé pour la réalisation d'éléments de garniture présentant à la fois un caractère décoratif et un rôle de confort et de sécurité, dans des applications aussi variées que la construction automobile, l'ameublement et les installations de bureaux (électroménager-informatique), de magasins ou d'habitations.

De tels éléments se composent essentiellement d'une portion de base rigide ou semi-rigide donnant sa forme à la pièce considérée, et d'une portion de recouvrement de cette base donnant à la face visible de ladite pièce son toucher et son aspect.

Divers procédés ont été proposés pour la réalisation d'éléments du même genre, notamment pour l'application, dans l'industrie automobile, à la réalisation par exemple de montants latéraux, consoles de tableaux de bord, de plafonds ou de planchers. Dans cette industrie, précisément, de tels éléments jouent bien entendu un rôle décoratif en dissimulant l'ossature métallique de la carosserie, mais ils contribuent également à l'impression de confort, de sécurité et d'esthétique grâce à leur toucher généralement moelleux ou rembourré.

Le procédé connu le plus courant consiste à coller la portion de recouvrement, généralement un tissu, sur la portion rigide, généralement un polymère styrénique, tel que l'A.B.S.

Un tel procédé présente des inconvénients liés à la fois à son prix de revient, qui fait intervenir le prix de la colle et la succession d'opérations nécessaires, et aux propriétés de l'élément rigide, notamment sa tendance à se révéler sonore sous les vibrations du véhicule et son incapacité à être recyclé.

Un autre type de procédé (connu par le DE-A-3324038) consiste à surmouler la portion rigide par dessus la portion de recouvrement en tissu préalablement disposée dans un moule. Dans ce cas, la matière plastique peut être soit pulvérisée sur le tissu avant moulage de l'ensemble sous pression, soit injectée entre un moule garni de tissu et un contre-moule, par une série d'orifices supposés répartir la matière sur le tissu. Dans ce dernier cas, la rencontre des flux de plastiques provenant des divers orifices donne lieu à la formation de lignes de soudure en relief peu esthétiques et génératrices de zones de moindre résistance aux chocs.

La présente invention élimine tous ces inconvénients grâce à un processus consistant,
- dans une première étape, à fixer la portion de recouvrement, à l'état plan, pré-tendu sur les bords de la périphérie de l'empreinte en creux du moule,
- dans une seconde étape, à déformer, par extension, la zone demeurant libre de ladite portion de recouvrement, sous l'effet de la pénétration du contre-moule à l'intérieur de l'empreinte en creux jusqu'à une distance de ladite empreinte correspondant à l'épaisseur de la pièce finie, les bords de ladite portion de recouvrement se trouvant immobilisés par pinçage entre les deux moitiés du moule.
- dans une troisième étape, à procéder à l'injection, sous basse pression, de la matière de la portion rigide, séquentiellement, par une série d'orifices dans un ordre assurant le remplissage homogène du moule par dessus la portion de recouvrement et le plaquage de ladite portion de recouvrement contre l'empreinte creuse, et
- dans une quatrième étape, à éjecter à froid la pièce obtenue et à en découper l'excédent de tissu.

Une telle pièce, résultant de cette succession d'étapes, est obtenue sans pli, ni boursouflure, quelle que soit sa forme, c'est à dire même si elle présente des angles vifs ou des creux étroits, grâce au fait que la matière est injectée par les orifices d'injection dans un ordre déterminé à l'avance selon la forme du moule, l'avancée des fronts de matière constamment dans le même sens éliminant la rencontre de deux flux, et assure le plaquage précis du tissu contre le moule quelle que soit la finesse des détails de celui-ci.

La mise en oeuvre de ce procédé permet une sélection très large des matériaux utilisés pour les deux portions de la pièce, en fonction de la destination de celle-ci, ses dimensions et son aspect.

Ainsi, pour la portion rigide ou semi-rigide, alors que l'on peut encore utiliser les polymères du type A.B.S., malgré leur sonorité, on préfère les divers polymères éthyléniques, et notamment le polyéthylène téréphtalate, le polybutylène téréphtalate, le polypropylène, ainsi que leurs copolymères, les polycarbonates, les polyesters thermoplastiques, ces matières pouvant contenir éventuellement des charges minérales, telles que talcs, kaolin, billes ou fibres de verre, farine de bois et analogues, ainsi que tous les produits régénérés.

Pour la portion de recouvrement, elle doit bien entendu être suffisamment extensible pour être repoussée contre le fond de l'empreinte creuse, tandis que ses bords demeurent immobilisés sur le pourtour de l'empreinte, sans rupture risquant de provoquer des fuites vers l'extérieur ; elle doit avoir une tenue thermique lui permettant de résister aux températures d'injection, qui sont de l'ordre de 200°C.

De préférence, cette portion comporte trois épaisseurs, à savoir une "doublure" assurant l'adhérence de cette portion à la portion rigide au moment de l'injection de la matière de celle-ci, une couche extérieure assurant l'aspect décoratif de la pièce et, entre les deux, une couche de mousse ayant une épaisseur pouvant atteindre plusieurs millimètres. Dans le cas où la doublure est utilisée seule, on peut considérer que la mousse représente une épaisseur nulle ou de quelques microns seulement.

La doublure peut être une étoffe tissée ou non tissée, selon l'élasticité requise, elle-même dictée par la profondeur de la pièce, en film de matière plastique (polyuréthane, polyéthylène, polypropylène ou polyester), ou en fibres de matière plastique telle que polyuréthane, polyéthylène, polyester, de polycarbonate, de polyfluor de vinylidène, de polyamide, de polypropylène, de viscose ou analogue. Elle doit avoir une bonne extensibilité à froid, au moment de sa déformation avant injection, ou éventuellement par préchauffage, assurer un bon accrochage à la portion rigide et constituer une bonne protection.

La technique de réalisation du tissu ou revêtement décoratif peut varier à l'infini, sous réserve des propriétés impératives rappelées ci-dessus : maille, chaîné trame, tissu circulaire etc... L'aspect peut être celui de jersey, rasé, gratté ou bouclé, du velours, de moquette (par exemple, pour l'intérieur des coffres à bagages d'un véhicule). Les moquettes peuvent être à poils ras, courts ou longs et être des produits dilours, aiguilletés ou tuft suivant leur mode de fabrication. Ce revêtement peut consister lui-même en un surmoulage sur un film ayant par exemple l'aspect du bois, l'aspect peinture de la carrosserie extérieure d'un véhicule ou d'un film métallique ou analogue.

La mousse intermédiaire peut consister en une mousse de polyéthylène, polypropylène, polyuréthane, polyester, polyol ou analogues, ayant une épaisseur compatible avec une déformabilité suffisante de la liaison entre les deux couches externes, et selon l'épaisseur de la pièce et son aspect.

Pour mieux faire comprendre l'invention, on va décrire sa mise en oeuvre dans un cas particulier, en se référant au dessin annexé, sur lequel :
- La figure 1 représente en coupe les deux moitiés du moule,
- la figure 2 est une vue schématique montrant le tissu mis en place sur l'empreinte en creux du moule,
- les figures 3 et 3' sont des vues schématiques illustrant la déformation à froid du tissu par enfoncement progressif du contre-moule,
- la figure 4 illustre l'étape d'injection de la matière plastique fondue ou visqueuse,
- et la figure 5 est une coupe de la pièce ainsi obtenue, après finissage.

Sur toutes les figures, les mêmes numéros de référence désignent les mêmes éléments ou des éléments équivalents.

On considère que la pièce à obtenir a la forme représentée en coupe sur la figure 5, consistant en une cuvette creuse, présentant une paroi oblique 1 et une paroi presque verticale 2 réunies par un fond 3 comportant un épaulement 4 et une rainure profonde 5, la périphérie de cette cuvette présentant deux rebords horizontaux 6 - 6' décalés d'une hauteur H.

Une telle pièce comporte pratiquement toutes les difficultés que l'on rencontre dans les techniques de moulage, surmoulage, collage et analogues, de réalisation de pièces composites à âme rigide ou semi-rigide A à surface revêtue d'une couche simple ou complexe B décorative et/ou confortable par son toucher et sa consistance. Cette pièce comporte le moulage des agrafes et tétons de fixation en matière plastique obtenus lors du surmoulage. Ces éléments sont usuels et indispensables pour fixer la pièce sur un véhicule automobile par exemple.

Le procédé selon l'invention permet d'obtenir de telles pièces dans une constitution et un aspect sans défauts, et moyennant une technique nouvelle, simple et peu coûteuse.

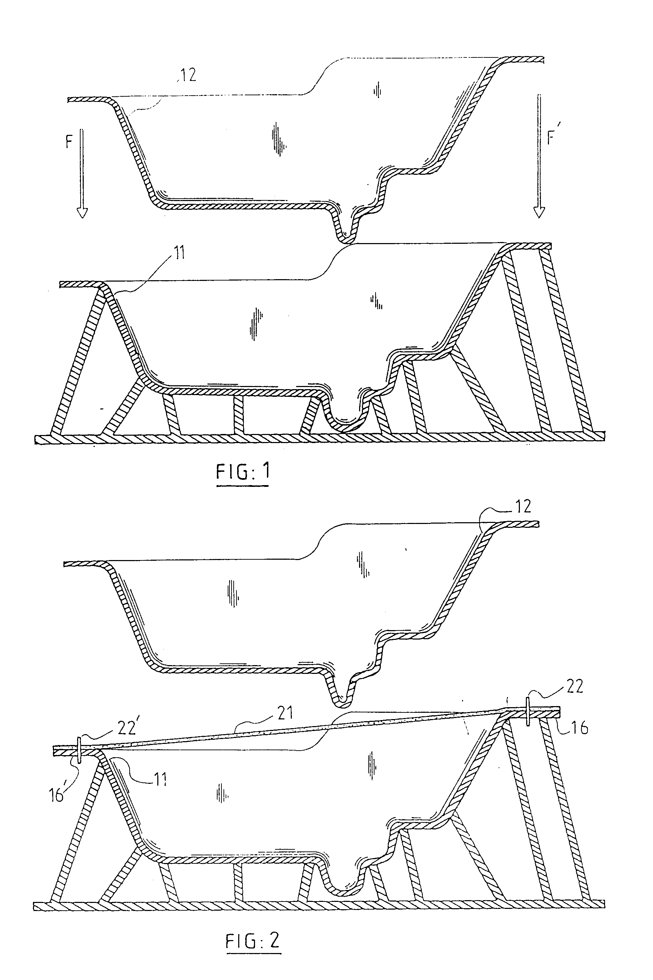

A cet effet, le procédé selon l'invention consiste à utiliser, de manière connue, un moule (figure 1) se composant d'une empreinte creuse 11 et d'un contre-moule 12 ayant exactement les formes 1 - 6/6' de la pièce de la figure 5, en négatif et en positif, c'est à dire se correspondant exactement l'un à l'autre, selon les flèches F-F' de la figure 1.

Comme illustré à la figure 2, l'invention consiste, dans une première étape, à tendre entre les bords horizontaux 16 - 16' de l'empreinte creuse 11, un tissu composite 21, ayant les propriétés d'extensibilité et de résistance à la chaleur énumérées plus haut. Tout moyen approprié pour accrocher les bords du tissu 21 aux rebords 16 - 16' convient, en particulier des aiguilles métalliques montées sur coulisseaux et rendues mobiles par des cales actionnées par des vérins simple effet. A la fermeture de l'outillage, le revêtement accroché et tendu sur les aiguilles épouse la forme du contre moule 12. Les coulisseaux mobiles permettent au revêtement de se mouvoir en maintenant une tension appropriée. Le nombre de points d'accrochage 22 dépend bien entendu de la forme de la pièce.

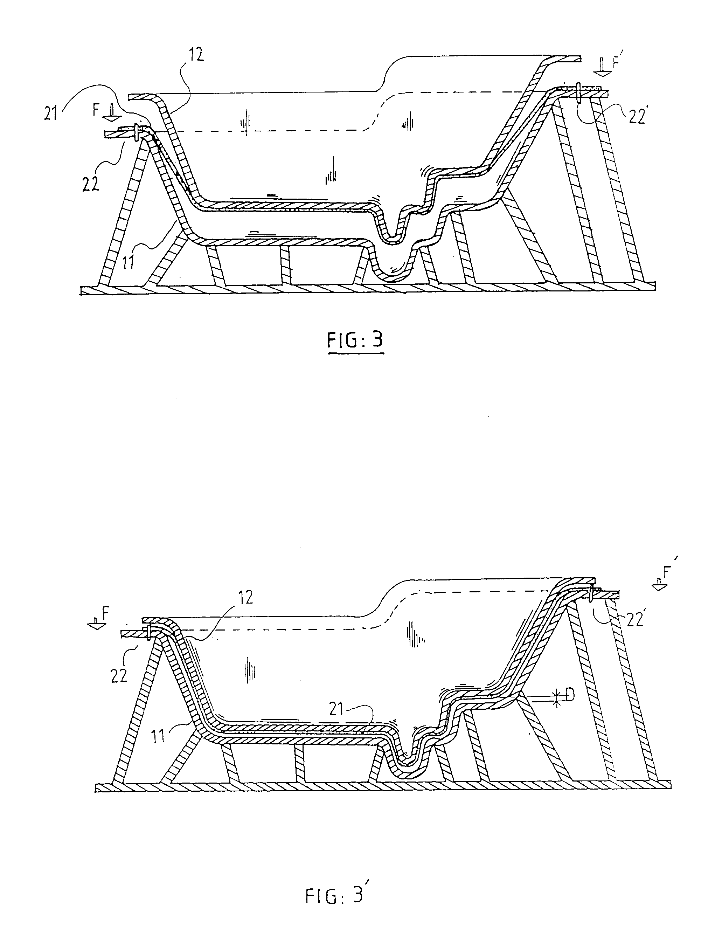

Dans une seconde étape, illustrée aux figures 3 - 3', le procédé selon l'invention, dans son principe, consiste à enfoncer le contre-moule 12 dans l'empreinte creuse fixe 11, selon les flèches F - F', en déformant de manière correspondante le tissu composite 21, grâce aux qualités d'extensibilité de ce dernier, et en l'amenant au fond de l'empreinte à une distance D correspondant à l'épaisseur de la portion rigide de la pièce, après injection. Sur la figure 3, le contre-moule 12 est à demi enfoncé dans l'empreinte creuse 11 et sur la figure 3', elle est complètement en place, la périphérie du tissu 21 étant pincée entre les rebords respectifs 16 - 16'des deux portions 11 et 12 du moule.

Bien entendu, la largeur de la zone plane de pincement de la bande de tissu 21 et son épaisseur entre ces rebords horizontaux ou légèrement inclinés 16 - 16' de la périphérie de l'empreinte creuse 11 et du poinçon 12 sont fonction des dimensions de la pièce, c'est à dire du glissement éventuel du tissu vers l'intérieur de l'empreinte au cours de son enfoncement, et de son épaisseur.

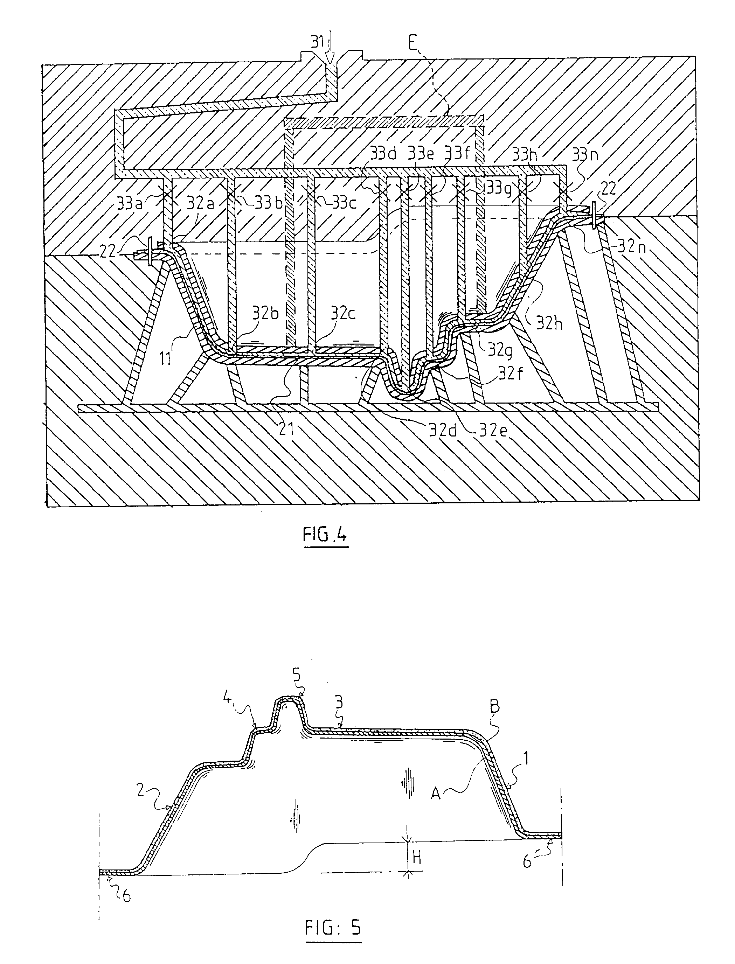

Dans la troisième étape du procédé selon l'invention, la matière plastique qui constituera la portion rigide de la pièce associée au tissu 21, est injectée, sous basse pression comme illustré de façon très schématique par la figure 4, à partir d'une source 31 par une série d'orifices d'injection 32ₐ, 32_{b}, ..., 32ₙ, pratiqués dans le contre-moule 12, et représentés sur la figure 4 (mais pas sur les figures 1 à 3). Il est important de noter que, selon le procédé de l'invention, les flux de matière ne se rencontrent jamais frontalement puisque l'écoulement de ladite matière injectée se fait touhours dans le même sens.

Au surplus, il faut noter également que, sous l'effet du flux d'injection de la matière, le tissu est plaqué contre le fond du moule, ce qui conduit à achever sa déformation pendant le cours du cycle de fabrication.

Cette injection est opérée de manière séquentielle, selon un programme déterminé à l'avance, en fonction de la forme de la pièce, de manière à éviter que les flux de matière plastique fondue sous basse pression en provenance des orifices 32ₐ, ...32ₙ successivement ouverts et fermés par des commandes 33ₐ, ...33ₙ, ne se rencontrent autrement qu'à chaud, ce qui créerait alors dans la surface de la pièce, des lignes de soudure correspondant, en aspect, à des plis ou bourrelets, et en termes de résistance, de lignes de rupture. Par ailleurs, la matière plastique fondue ainsi injectée plaque parfaitement le tissu 21 dans tous les détails de relief de l'empreinte creuse 11, de sorte que la pièce ainsi obtenue est donc parfaitement homogène, aussi bien du point du vue mécanique qu'esthétique, ce qui représente le progrès essentiel apporté par l'invention.

Bien entendu, cet avantage est obtenu quelle que soit la nature du support souple 21. Un avantage supplémentaire est obtenu dans le cas où à la fois la portion rigide A et le revêtement souple B sont réalisés dans la même matière, par exemple un polyester, car, dans ce cas, c'est l'ensemble de la pièce de la figure 5 qui peut être recyclé, soit dès le départ si elle comporte des imperfections, soit si elle est récupérée.

Dans le but de faciliter le glissement du tissu 21 dans tous les reliefs de l'empreinte creuse 11, selon une variante du procédé selon l'invention, il est prévu de procéder à une ouverture partielle limitée de l'outillage au moment de l'injection de matière plastique, puis de refermer ledit outillage de manière que ladite matière soit soumise à la pression de verrouillage, et cela presque avant achèvement de l'injection, c'est à dire avant le début du refroidissement. Une telle ouverture partielle ne doit cependant pas excéder quelques centièmes à quelques dixièmes de mm.

## Revendications

1. Procédé pour la réalisation de pièces comportant une portion support rigide ou semi-rigide revêtue d'une portion de recouvrement décorative souple, caractérisé en ce qu'il consiste :
- Dans une première étape, à fixer la portion souple (21) à l'état pré-tendu sur le rebord périphérique (16) de l'empreinte creuse (11) d'un moule.
- Dans une seconde étape, à déformer la zone demeurant libre de ladite portion souple, par extension sous l'effet de la pénétration d'un contre-moule (12) à l'intérieur de ladite empreinte creuse (11), jusqu'à une distance du fond de celle-ci correspondant à l'épaisseur de la pièce finie, les bords de ladite portion souple pouvant demeurer immobilisés par pinçage entre les deux moitiés du moule,
- Dans une troisième étape, à injecter la matière de ladite portion rigide à l'état fondu, sous basse pression, dans l'espace subsistant entre les deux moitiés du moule, par dessus ladite portion souple, de manière à plaquer celle-ci contre la paroi de l'empreinte creuse (11), ladite injection étant opérée séquentiellement par une série d'orifices d'injection (32) de manière telle que, les fronts successifs de matière fondue progressant constamment dans le même sens, ne se rencontrent qu'à l'état chaud, de manière à remplir complètement le moule sans créer, dans la pièce, de lignes de soudure correspondant à des plis ou bourrelets et à des amorces de rupture mécanique de la pièce.
- Dans une quatrième étape, à éjecter à froid la pièce obtenue et à en découper l'excédent de tissu.

2. Procédé selon revendication 1, caractérisé en ce que la matière plastique constituant la portion rigide ou semi-rigide est choisie entre les polymères éthyléniques tels que le polyéthylène téréphtalate, le polybutylène téréphtalate, le polypropylène ainsi que leurs copolymères, les polycarbonates, les polymères styréniques tels que l'A.B.S. et leurs copolymères, notamment avec les polycarbonates, les polyesters thermoplastiques et analogues, ces matières pouvant contenir des charges minérales telles que le talc, le kaolin, les fibres de verre et analogues.

3. Procédé selon l'une des revendications 1 et 2, caractérisé en ce que la portion souple consiste en la superposition d'une "doublure" assurant l'adhérence de cette portion souple à la portion rigide de la pièce et d'une couche extérieure assurant l'aspect décoratif de la pièce et, entre ces deux couches, d'une troisième couche de mousse ayant une épaisseur de 50 microns à 10 mm assurant le confort et la sécurité de la pièce.

4. Procédé selon la revendication 3, caractérisé en ce que ladite doublure est une couche de fibres tissées ou non tissées choisies entre les fibres de polyester, de polyamides, de polypropylène, de viscose ou analogues.

5. Procédé selon la revendication 3, caractérisé en ce que la couche extérieure décorative est choisie entre un jersey bouclé ou rasé, un velours, une moquette ou un surmoulage d'un film ayant par exemple l'aspect du bois ou une pellicule métallique.

6. Procédé selon revendication 3, caractérisé en ce que ladite mousse est choisie entre les mousses de polyéthylène, polypropylène, polyuréthane, polyesters, polyols et analogues.

7. Procédé selon l'une quelconque des revendications précédentes, caractérisé en ce que la matière de la portion rigide et la matière de la portion souple sont les mêmes pour permettre le recyclage de la pièce.

## Claims

1. Method for producing pieces comprising a rigid or semi-rigid supporting portion covered with a flexible decorative covering portion, characterised in that it consists of:
- in a first step, fixing the flexible portion (21) in a prestretched state to the peripheral rim (16) of the hollow cavity (11) of a mould;
- in a second step, deforming the area of the said flexible portion remaining free, by stretching under the effect of the entry of a counter-mould (12) into the said hollow cavity (11) to a distance from the bottom of the latter corresponding to the thickness of the finished piece, whilst the edges of the said flexible portion can remain immobilised by gripping between the two halves of the mould;
- in a third step, injecting the material of the said rigid portion in the molten state, at low pressure, into the space remaining between the two halves of the mould, over the said flexible portion, so as to press the latter against the wall of the hollow cavity (11), the said injection being effected sequentially through a series of injection orifices (32) in such a way that, with the successive fronts of molten material progressing continuously in the same direction, they meet only in the cold state, so as to fill the mould completely without creating, in the piece, weld lines resulting in folds or rolls and incipient mechanical breaks in the piece;
- in a fourth step, ejecting the piece obtained when cold and cutting away from it any excess material.

2. Method according to Claim 1, characterised in that the plastic material constituting the rigid or semi-rigid portion is chosen from amongst the ethylene polymers such as polyethylene terephthalate, polybutylene terephthalate, together with their copolymers, polycarbonates, styrene polymers such as ABS and their copolymers, notably with polycarbonates, thermoplastic polyesters and the like, whilst these materials may contain fillers such as talc, kaolin, glass fibres and the like.

3. Method according to one of Claims 1 or 2, characterised in that the flexible portion consists of the superimposition of a "lining" providing the adhesion of this flexible portion to the rigid portion of the piece and an outer layer providing the decorative appearance of the piece and, between these two layers, a third layer of foam with a thickness of 50 microns to 10 mm providing the comfort and safety of the piece.

4. Method according to Claim 3, characterised in that the said lining is a layer of woven or non-woven fibres chosen from amongst polyester, polyamide, polypropylene, viscous or similar fibres.

5. Method according to Claim 3, characterised in that the outer decorative layer is chosen from amongst a loop-pile or cut-pile jersey, velvet, moquette or a surface moulding of a film having for example the appearance of wool or a metallic skin.

6. Method according to Claim 3, characterised in that the said foam is chosen from amongst polyethylene, polypropylene, polyurethane, polyester, polyol or similar foams.

7. Method according to any one of the preceding claims, characterised in that the material of the rigid portion and the material of the flexible portion are the same in order to allow recycling of the piece.

## Patentansprüche

1. Verfahren zur Herstellung von Bauteilen, die ein starres oder halbstarres Stützteil, das mit einem dekorativen, flexiblen Überzugteil abgedeckt ist, enthalten, dadurch gekennzeichnet, daß es umfaßt:
- in einem ersten Schritt das Befestigen des flexiblen Teils (21) in vorgespanntem Zustand an dem peripheren Rand (16) des Hohlgesenks (11) einer Form,
- in einem zweiten Schritt das Verformen des frei verbliebenen Bereichs des genannten flexiblen Teils durch Ausdehnen unter der Wirkung des Eindringens einer Gegenform (12) in das Innere des besagten Hohlgesenks (11) bis auf einen Abstand von dessen Boden, welcher der Stärke des fertigen Bauteils entspricht, wobei die Ränder des genannten flexiblen Teils durch Einklemmen zwischen den beiden Formhälften unbeweglich festgehalten sind,
- in einem dritten Schritt das Einspritzen des Materials des erwähnten starren Teils im geschmolzenen Zustand unter niedrigem Druck in den zwischen den beiden Formhälften vorhandenen Zwischenraum auf das genannte flexible Teil von oben derart, daß dieses gegen die Wand des Hohlgesenks (11) fest angelegt wird, wobei das besagte Einspritzen nacheinander durch eine Reihe von Einspritzdüsen (32) in der Weise ausgeführt wird, daß die aufeinanderfolgenden Frontseiten des geschmolzenen Materials sich konstant in der gleichen Richtung vorwärtsbewegen und im heißen Zustand nicht zusammentreffen, um auf diese Weise die Form vollständig zu füllen, ohne in dem Bauteil Schweißnähte zu erzeugen, die Falten oder Wulsten und Ausgangspunkten für einen mechanischen Bruch des Bauteils entsprechen,
- in einem vierten Schritt das Auswerfen des kalten erhaltenen Bauteils sowie das Abschneiden des Überstandes des Gewebes.

2. Verfahren nach Anspruch 1, dadurch gekennzeichnet, daß das das starre oder halbstarre Teil bildende Kunststoffmaterial aus den Äthylenpolymerisaten, wie dem Polyäthylenterephthalat, dem Polybutylenterephthalat, dem Polypropylen ebenso wie deren Kopolymerisaten, den Polykarbonaten, den Styrolpolymerisaten, wie dem A.B.S., und deren Kopolymerisaten, insbesondere mit den Polykarbonaten, den thermoplastischen Polyestern und ähnlichen, ausgewählt ist, wobei diese Materialien mineralische Füllstoffe, wie Talkum, Kaolin, Glasfasern und ähnliche, enthalten können.

3. Verfahren nach einem der Ansprüche 1 und 2, dadurch gekennzeichnet, daß das flexible Teil aus der Übereinanderschichtung einer "Futterschicht", die das Haften dieses flexiblen Teils an dem starren Teil des Bauteils gewährleistet, und einer äußeren Schicht, die für das dekorative Aussehen des Bauteils sorgt, sowie einer dritten Schaumschicht zwischen diesen beiden Schichten, welche eine Dicke von 50 Mikron bis 10 mm hat und für den Komfort sowie die Sicherheit des Bauteils sorgt, besteht.

4. Verfahren nach Anspruch 3, dadurch gekennzeichnet, daß die genannte Futterschicht eine Schicht aus gewebten oder ungewebten Fasern ist, die aus den Fasern von Polyester, von Polyamiden, von Polypropylen, von Viskose und ähnlichen gewählt sind.

5. Verfahren nach Anspruch 3, dadurch gekennzeichnet, daß die äußere, dekorative Schicht aus einem Schlingenbouclé oder geschnittenen Bouclé, einem Velours,einer Auslegeware oder einer Filmnachbildung, die beispielsweise das Aussehen von Holz hat, oder einem Metallfilm gewählt ist.

6. Verfahren nach Anspruch 3, dadurch gekennzeichnet, daß der genannte Schaum aus den Schäumen von Polyäthylen Polypropylen, Polyurethan, Polyestern, Polyolen und ähnlichen gewählt ist.

7. Verfahren nach einem der vorhergehenden Ansprüche, dadurch gekennzeichnet, daß das Material des starren Teils und das Material des flexiblen Teils solche sind, die ein Recycling des Bauteils erlauben.
